Europäisches Patentamt

European Patent Office

Office européen des brevets

(11) Veröffentlichungsnummer: **0 475 544 A1**

# (12) EUROPÄISCHE PATENTANMELDUNG

(21) Anmeldenummer: **91250210.1**

(22) Anmeldetag: **26.07.91**

(51) Int. Cl.5: **G03B 17/10**

(30) Priorität: **06.09.90 DE 4028540**

(43) Veröffentlichungstag der Anmeldung:
**18.03.92 Patentblatt 92/12**

(84) Benannte Vertragsstaaten:
**AT CH DE FR GB IT LI**

(71) Anmelder: **ARNOLD & RICHTER CINE TECHNIK GMBH & CO. BETRIEBS KG.**
**Türkenstrasse 89**
**W-8000 München 40(DE)**

(72) Erfinder: **Grosser, Claus**
**Zeisigweg 14**
**W-8050 Freising(DE)**
Erfinder: **Jacoby, Hans Dieter, Dr.**
**Beethovenstrasse 78**
**W-8011 Vaterstetten(DE)**
Erfinder: **Köhler, Hanns, Dr.**
**Danklstrasse 29**
**W-8000 München 70(DE)**

(74) Vertreter: **Maikowski, Michael, Dipl.-Ing. Dr. et al**
**Patentanwälte Maikowski & Ninnemann**
**Xantener Strasse 10**
**W-1000 Berlin 15(DE)**

(54) **Vorrichtung zur Geräuschisolation von Laufbildkameras.**

(57) Vorrichtung zur Geräuschisolation von Laufbildkameras mit einer schallschützenden Abstützung des die Geräusche erzeugenden Teile des Kameramechanismus tragenden Kameraskeletts 1 in einem Kameragehäuse 2, das einen Objektivträger 26 aufweist, an dem eine auswechselbare Aufnahmeoptik befestigbar ist, wobei zur schallschützenden Abstützung des Kameraskeletts 1 in dem Kameragehäuse 2 mehrere schallisolierende Verbindungselemente 3, 4, 5, 6 zwischen dem Kameraskelett 1 und dem Kameragehäuse 2 angeordnet sind, von denen zumindest ein Teil eine richtungsabhängige Eigensteifigkeit aufweist.

FIG. 2

Die Erfindung bezieht sich auf eine Vorrichtung zur Geräuschisolation von Laufbildkameras gemäß dem Oberbegriff des Anspruchs 1.

Laufbildkameras weisen zum Transport eines Laufbildfilmes Motor- und Getriebeeinrichtungen sowie eine bewegliche Blendeneinrichtung auf, mit der der Strahlengang während des Filmtransports vom Aufnahmeobjektiv zur Bildebene unterbrochen wird. Diese beweglichen Einrichtungen erzeugen mechanische Schwingungen, die in der Filmkamera selbst nicht ausgeschlossen werden können. Um den Eigengeräuschpegel einer derartigen Filmkamera auf ein Mindestmaß zu reduzieren ist es erforderlich, die Übertragung dieser unabdingbaren Schwingungen auf die Außenhaut der Filmkamera zu verhindern.

Zur Geräuschisolation werden dämpfende Materialien wie Gummi und dergleichen zwischen den beweglichen Teilen der Filmaufnahmekamera und dem Kameragehäuse eingesetzt, die jedoch den Nachteil einer geringen mechanischen Stabilität aufweisen, so daß ein häufiges Nachjustieren erforderlich ist, da das Kameraobjektiv an dem Kameragehäuse befestigt ist, während die Bildebene des Laufbildfilmes im Bereich der beweglichen Teile der Filmkamera verläuft, so daß jede Verschiebung zwischen Kameragehäuse und dem die beweglichen Teile der Filmaufnahmekamera tragenden Kameraskelett Bildunschärfen bzw. Bildverschiebungen hervorruft. Zur Lösung dieses Problems werden verschiedene bekannte Maßnahmen angeboten.

Aus der DE 30 49 150 C2 ist eine Filmaufnahmekamera bekannt, die aus einer Innenkamera und einem Kamera-Außengehäuse besteht. Auf der Innenkamera sind ein Bidfenster, ein Filmtransportwerk, eine Mattscheibe, eine rotierende Spiegelblende, eine Einrichtung zum Transport des Laufbildfilmes von einer Filmabwickelspule zu einer Filmaufwickelspule sowie zu einem Filmmagazin und ein Motor-Getriebeaggregat für den Antrieb sämtlicher beweglicher Teile der Kamera zusammengefaßt.

An dem Kamera-Außengehäuse ist über eine Objektivbefestigung eine auswechselbare Aufnahmeoptik festgelegt. Die Innenkamera ist an dem Kamera-Außengehäuse durch Baugruppen abgestützt, die bei einer Lageänderung der Filmaufnahmekamera Lageänderungen der Innenkamera in Bezug auf das Kamera-Außengehäuse zulassen.

Zur Kompensation dieser zugelassenen Lageänderungen der Innenkamera in Bezug auf das Kamera-Außengehäuse ist eine Einrichtung vorgesehen, die bei derartigen Lageänderungen der Filmaufnahmekamera die Innenkamera relativ zum Kamera-Außengehäuse in eine vorgegebene Sollage zurückstellt, in der die geforderte Bildschärfe gewährleistet ist. Diese Rückstelleinrichtung besteht aus einem zweiarmigen Hebel, der in einem Drehpunkt in einem mit dem Kamera-Außengehäuse verbundenen Verbindungsstück gelagert ist, während der eine Hebelarm drehbar an der Innenkamera festgelegt und der andere Hebelarm durch eine im Sinne der Lageveränderung der Innenkamera wirkende Stellkraft beaufschlagbar ist.

Diese bekannte Einrichtung reagiert zwar im kompensierenden Sinne auf Bewegungen der Filmaufnahmekamera, kann jedoch nicht verhindern, daß kurzfristig Verschiebungen des Auflagemaßes zwischen der am Kamera-Außengehäuse festgelegten Objektivebene und der an der Innenkamera bzw. dem Kameraskelett festgelegten Bildebene auftreten. Darüber hinaus ist die Kompensationseinrichtung verhältnismäßig aufwendig und fordert einen zusätzlichen Platzbedarf in der Filmaufnahmekamera.

Aus der US-PS 4,174,157 ist eine Laufbildkamera bekannt, die aus einer Innenkamera und einem Kamera-Außengehäuse zusammengesetzt ist, wobei auf der Innenkamera die beweglichen Teile der Kamera befestigt sind, während das Kamera-Außengehäuse eine Objektivbefestigung aufweist. Zwischen der Innenkamera und dem Kamera-Außengehäuse sind schallabsorbierende Verbindungselemente vorgesehen, die einen Außengewindestift aufweisen, der in das Kameragehäuse bzw. in die Innenkamera einschraubbar ist. Der Außengewindestift wird von einer Innengewindehülse aufgenommen, zwischen der und einer Außengewinde-Lagerbuchse ein hohlzylindrisches Elastomer-Einsatzstück vorgesehen ist.

Dabei sind der Außengewindestift, die Innengewindehülse, das Elastomer-Einsatzstück und die Außengewinde-Lagerbuchse koaxial zueinander angeordnet, wobei die Außengewinde-Lagerbuchse von einem Innengewindeelement auf dem jeweils anderen Teil des Kameragehäuses bzw. der Innenkamera aufgenommen wird. Wird nach dem Lösen des Außengewindestiftes die Außengewinde-Lagerbuchse innerhalb der Innengewindehülse verdreht, so ist eine seitliche Ausrichtung der Innenkamera und der beweglichen Kamerateile in Bezug auf das Kameragehäuse und damit auf Objektivbefestigung möglich.

Bei dieser bekannten Vorrichtung zur Geräuschisolation der Innenkamera gegenüber dem Kamera-Außengehäuse ist ein ständiges Nachjustieren an den schallabsorbierenden Verbindungselementen erforderlich, um das notwendige Auflagemaß zwischen Objektivebene und Bildebene zu gewährleisten.

Der vorliegenden Erfindung liegt die Aufgabenstellung zugrunde, eine Vorrichtung zur Geräuschisolation von Laufbildkameras zu schaffen, die einerseits eine maximale Geräuschdämpfung und andererseits die Einhaltung des vorgegebenen Auflagemaßes zwischen Objektivebene und Bildebene ohne Nachjustierung oder zusätzliche Kompensationseinrichtungen sicherstellt.

Diese Aufgabe wird durch das kennzeichnende Merkmal des Anspruchs 1 gelöst.

Die erfindungsgemäße Lösung schafft eine optimale Geräuschisolation zwischen Kameraskelett und Kameragehäuse bei gleichzeitiger Festlegung des Auflagemaßes zwischen Objektivebene und Bildebene, ohne daß Nachjustierungen oder Kompensationseinrichtungen zur Einhaltung des Auflagemaßes erforderlich sind.

Die erfindungsgemäße Lösung geht von der Erkenntnis aus, daß bei einer zu großen Steifigkeit der zwischen Kameraskelett und Kameragehäuse angeordneten schallisolierenden Verbindungselementen, d.h. bei zu harten Verbindungselementen die dämpfenden Eigenschaften dieser Verbindungselemente gering sind, so daß die Geräuschisolation nicht den geforderten Eigenschaften entspricht, während bei einer zu geringen Eigensteifigkeit der schallisolierenden Verbindungselemente, d.h. bei Verwendung sehr weicher Verbindungselemente, das Auflagemaß zwischen Objektivebene und Bildebene nicht eingehalten werden kann, so daß Unschärfen oder notwendige Nachjustierungen bzw. Kompensationseinrichtungen erforderlich sind, um die geforderte Bildqualität einzuhalten.

Verwendet man hingegen schallisolierende Verbindungselemente mit richtungsabhängiger Eigensteifigkeit, so kann zum einen die für Schallisolation geforderte "weiche" Aufhängung des Kameraskeletts im Kameragehäuse und zum anderen die für die Einhaltung des Auflagemaßes erforderliche "harte" Eigensteifigkeit der Verbindungselemente in der Ebene senkrecht zum Auflagemaß eingehalten werden.

Eine vorteilhafte Weiterbildung der erfindungsgemäßen Lösung ist dadurch gekennzeichnet, daß die eine richtungsabhängige Eigensteifigkeit aufweisenden Verbindungselemente eine hohe, fest definierte und temperaturkompensierte Steifigkeit in Richtung des Auflagemaßes zwischen der Objektivebene des Kameragehäuses und der Bildebene des Kameraskeletts sowie eine geringe Steifigkeit in der Ebene senkrecht dazu aufweisen.

Die zusätzliche Verwendung von schallisolierenden Verbindungselementen mit temperaturkompensierter Eigensteifigkeit in Richtung des Auflagemaßes gewährleistet die Einhaltung des Auflagemaßes auch bei Temperaturschwankungen, so daß auch für den Fall starker Temperaturänderungen kein Nachjustieren der Verbindungselemente zwischen Kameraskelett und Kameragehäuse erforderlich ist, um die geforderte Bildschärfe einzuhalten.

Eine weitere vorteilhafte Weiterbildung der erfindungsgemäßen Lösung ist dadurch gekennzeichnet, daß die eine richtungsabhängige Eigensteifigkeit aufweisenden Verbindungselemente zwischen der Frontseite des Kameraskeletts und der Frontseite des Kameragehäuses angeordnet und mindestens ein weiteres Verbindungselement zwischen der Rückseite des Kameraskeletts und der Rückseite des Kameragehäuses vorgesehen ist, das bei hoher Elastizität eine große Vorspannkraft zwischen dem Kameraskelett und dem Kameragehäuse ausübt.

Mit dieser Weiterbildung der erfindungsgemäßen Lösung wird erreicht, daß das Kameraskelett direkt im Kameragehäuse an vorgegebenen Auflagepunkten aufgehängt werden kann, während es bei einem weiteren Punkt zwischen Kameraskelett und Kameragehäuse mit großer Vorspannung in die geforderte Lage geschoben wird. Damit wird das Bestreben unterstützt, die Aufhängung des Kameraskeletts im Kameragehäuse in einer Richtung, nämlich in Richtung des Auflagemaßes besonders hart und temperaturkompensiert auszuführen, während es in den anderen Richtungen sehr weich aufgehängt wird und damit eine optimale Geräuschisolation gewährleistet.

Eine vorteilhafte Ausgestaltung der erfindungsgemäßen Lösung ist dadurch gekennzeichnet, daß die frontseitigen Verbindungselemente einerseits an der Ober- bzw. Unterseite des Kameragehäuses und andererseits an der Frontplatte des Kameraskeletts befestigt sind und eine vorgegebene, hohe Steifigkeit in Richtung auf die Frontplatte des Kameraskeletts ausüben.

Die Aufhängung des Kameraskeletts mittels richtungsabhängiger Verbindungselemente im Bereich der Frontseite der Kamera gewährleistet dort unmittelbar die Auswirkung der richtungsabhängigen Eigensteifigkeits-Eigenschaften der Verbindungselemente, wo diese gefordert sind, nämlich im Bereich zwischen Bildebene und Objektivebene, während die für die Geräuschisolation notwendigen "weichen" Eigenschaften der Verbindungselemente in der Ebene senkrecht dazu vorgesehen sind und dabei die Anzahl der Verbindungselemente auf ein Minimum reduziert wird, so daß im übrigen keine Körperschallübertragung vom Kameraskelett auf das Kameragehäuse stattfinden kann und in diesen Bereichen lediglich der Luftschall zu isolieren ist.

Eine weitere vorteilhafte Ausgestaltung der erfindungsgemäßen Lösung ist dadurch gekennzeichnet, daß die eine richtungsabhängige Eigensteifigkeit aufweisenden Verbindungselemente an Punkten des Kameragehäuses befestigt sind, die eine hohe Struktursteifigkeit aufweisen, insbesondere im Bereich von Ecken oder Kanten des Kameragehäuses.

Diese Ausgestaltung der erfindungsgemäßen Lösung unterstützt das Bestreben, mit einem Minimum an körperschallübertragenden schallisolierenden Verbindungselementen auszukommen und diese insbesondere dort einzusetzen, wo bei den in Kauf zu nehmenden geringen Körperschallübertragungen ebenfalls geringe Auswirkungen auftreten. Dies ist insbesondere dort der Fall, wo keine Verformungen am Kameragehäuse infolge des Körperschalls auftreten können, d.h. an Stellen hoher Eingangsimpedanz bzw. Struktursteifigkeit, wie sie durch Ecken oder Kanten des Kameragehäuses gegeben sind.

An diesen Stellen können konstruktionsbedingt nur geringe Gehäuseverformungen auftreten, so daß demzufolge nur geringe Gehäuseschwingungen entstehen können, die durch die Körperschallübertragung seitens der Verbindungselemente vom Kameraskelett zum Kameragehäuse hervorgerufen werden.

Eine vorteilhafte Weiterbildung der erfindungsgemäßen Lösung ist dadurch gekennzeichnet, daß die eine richtungsabhängige Eigensteifigkeit aufweisenden Verbindungselemente einen Schwingungsdämpfer enthalten, die ein im wesentlichen hohlzylindrisches Dämpfergehäuse, eine im Dämpfergehäuse gelagerte Innenhülse sowie einen an einer Stirnseite der Innenhülse anliegenden und mittels einer Isolationshülse gegenüber der Zylinderwand der Innenhülse geräuschisolierten Dämpferstift aufweisen, wobei die Innenhülse aus Aluminium besteht und an der dem Kameraskelett zugewandten Stirnseite des Dämpfergehäuses aus Stahl abgestützt ist, daß der Dämpferstift aus Stahl besteht und an der dem Boden des Dämpfergehäuses zugewandten Stirnseite der Innenhülse mit einem Ende und mit seinem anderen Ende an einem mit dem Kameraskelett verbundenen Lager abgestützt ist.

Diese Ausgestaltung eines Schwingungsdämpfers mit temperaturkompensierten Eigenschaften gewährleistet, daß Wärmeausdehnungen der einzelnen Elemente des Schwingungsdämpfers aufgrund der unterschiedlichen Wärmeausdehnungseigenschaften kompensiert werden, so daß insgesamt ein festes Auflagemaß gewährleistet ist. Dadurch wird sichergestellt, daß auch bei starken Temperaturänderungen, denen Laufbildkameras häufig ausgesetzt sind, kein Nachjustieren erforderlich und das notwendige konstante Auflagemaß gewährleistet ist. Gleichzeitig wird durch die Einbeziehung einer Isolationshülse die Übertragung von Körperschall vom Kameraskelett auf das Kameragehäuse stark gedämpft, so daß auch der Schwingungsdämpfer wesentlich zur gesamten Dämpfung der Körperschallübertragung beiträgt.

Eine weitere vorteilhafte Ausgestaltung der erfindungsgemäßen Lösung ist dadurch gekennzeichnet, daß das Dämpfergehäuse ein Schneckengewinde aufweist, das in Verbindung mit einer Schnecke die Feinjustierung des Kameraskeletts in Bezug auf den Objektivträger ermöglicht und einen zapfenförmigen Teil zur Grobjustierung aufweist.

Die Ausgestaltung der Schwingungsdämpfer ist so bemessen, daß eine grobe Vorjustierung des Kameraskeletts in Bezug auf das Kameragehäuse und daran anschließend eine Feinjustierung über ein leicht zugängliches Schneckengewinde erfolgen kann, so daß eine exakte Einstellung der Bildebene in Bezug auf die Objektivebene erfolgen kann. Auch eventuell später notwendige Nachjustierungen können damit in einfacher Weise vorgenommen werden, ohne daß Teile der Kamera ausgebaut werden müssen.

Eine weitere vorteilhafte Ausgestaltung der erfindungsgemäßen Lösung ist dadurch gekennzeichnet, daß die eine richtungsabhängige Eigensteifigkeit aufweisenden Verbindungselemente ein mit dem Kameragehäuse verbundenes Lagergehäuse aufweisen, das zylindrische Bohrungen enthält, die auf die Frontseite des Kameraskeletts gerichtet sind und zur Aufnahme von Pufferelementen und von Schwingungsdämpfern dienen, wobei die Pufferelemente aus hohlzylindrischen Gummipuffern bestehen, die mittels eines durch die Innenbohrung der Gummipuffer gesteckten Schraubelementes und einer Buchse mit der Frontseite des Kameraskeletts verbunden sind.

Die Zusammensetzung der Verbindungselemente mit richtungsabhängiger Eigensteifigkeit aus Pufferelementen und Schwingungsdämpfern schafft eine wirksame Realisierung der unterschiedlichen Steifigkeiten der Verbindungselemente in Richtung des Auflagemaßes bzw. in der Richtung senkrecht dazu.

Eine weitere vorteilhafte Ausgestaltung der erfindungsgemäßen Lösung ist dadurch gekennzeichnet, daß die Lagerbuchse aus einem äußeren Stahlring, einem im Stahlring angeordneten Ring aus Spezialgummi und einem in dem Ring aus Spezialgummi angeordneten Plexiglas-Ring besteht.

Auch die Lagerbuchsen als Gegenlager zu den Dämpferstiften weisen dämpfende Eigenschaften auf, indem zwischen den Stahlringen ein Ring aus Spezialgummi angeordnet ist, so daß neben einem hohen Genauigkeitsmaß auch bei starken Erschütterungen eine zusätzliche dämpfende Eigenschaft durch die Lagerbuchsen sichergestellt ist.

Die Erfindung wird nachstehend an Hand der in der Zeichnung dargestellten Ausführungsbeispiele näher erläutert.

Es zeigen:

Figur 1      eine schematische Prinzipskizze einer Laufbildkamera mit Kameraskelett und Kameragehäuse sowie dazwischen angeordneten schallisolierenden Verbindungselementen;

Figur 2      einen Längsschnitt durch eine Laufbildkamera mit schallisolierenden Verbindungselementen, die richtungsabhängige und richtungsunabhängige Eigensteifigkeiten aufweisen;

Figur 3 eine teilweise geschnittene Frontansicht der Laufbildkamera gemäß Figur 2;

Figur 4 einen Längsschnitt durch ein Verbindungselement mit richtungsabhängiger Eigensteifigkeit;

Figur 5 einen Längsschnitt durch einen Schwingungsdämpfer und

Figur 6 einen Schnitt durch eine Lagerbuchse eines Verbindungselements mit richtungsabhängiger Eigensteifigkeit.

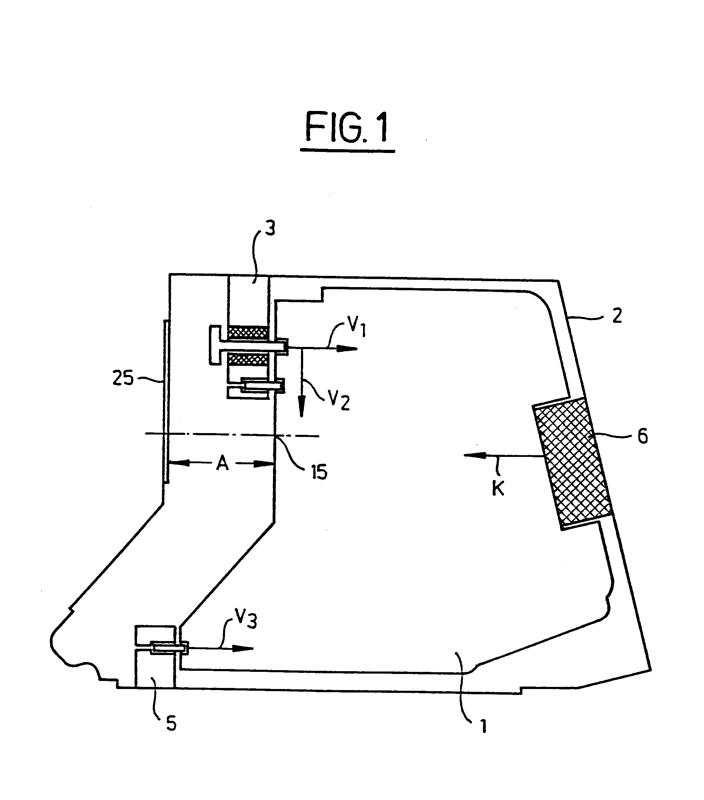

Die in Figur 1 dargestellte schematische Prinzipskizze zeigt eine Laufbildkamera mit einem Kameraskelett 1, das sämtliche bewegliche Teile der Laufbildkamera wie Greiferschaltwerk, Vor- und Nachwickeleinrichtungen, Spiegelblende und dergleichen trägt, die sämtlich geräuscherzeugende Elemente sind.

Das Kameraskelett 1 ist von einem Kameragehäuse 2 umgeben, das die auf dem Kameraskelett 1 erzeugten Geräusche gegenüber der Umgebung der Laufbildkamera abschirmen soll. Dies wird zum einen durch geeignete Maßnahmen erzielt, die den Luftschall zwischen Kameraskelett 1 und Kameragehäuse 2 dämpfen und zum anderen entsprechend dem Gegenstand der vorliegenden Erfindung durch Verbindungselemente 3, 5, 6, die das Kameraskelett 1 im Kameragehäuse 2 aufhängen und gleichzeitig so beschaffen sind, daß sie den Körperschall optimal dämpfen.

Darüber hinaus soll die Anordnung und Eigenschaft der Verbindungselemente 3, 5, 6 so beschaffen sein, daß das vorgegebene Auflagemaß A zwischen der Objektivebene 25 und der Bildebene 15 exakt eingehalten wird, da jede Verschiebung des Auflagemaßes A Bildunschärfen sowie Ungenauigkeiten der Bildlage zur Folge hat.

Diese gegensätzlichen, an die Verbindungselemente 3, 5, 6 gestellten Forderungen könnten durch einen Kompromiß gelöst werden, bei dem solche Verbindungselemente verwendet werden, die eine hinreichende Geräuschdämpfung ermöglichen, gleichzeitig aber ein hinreichend stabiles Auflagemaß sicherstellen. Dies würde aber bedeuten, daß man zur Einstellung eines exakten Auflagemaßes A ständig nachjustieren oder entsprechende Kompensationseinrichtungen wie eingangs beschrieben vorsehen müßte. Gleichzeitig müßte man aber bei einem derartigen Kompromiß ein bestimmtes Maß an Körperschallübertragungen hinnehmen, so daß die geforderte Geräuschisolation nicht optimal wäre.

Erfindungsgemäß weist zumindest das eine schallisolierende Verbindungselement 3 eine richtungsabhängige Eigensteifigkeit auf, die in Richtung des Pfeiles V1 eine hohe Eigensteifigkeit, d.h. "harte" Federeigenschaften aufweist, während sie in Richtung des Pfeiles V2 eine sehr geringe Eigensteifigkeit hat und sich damit durch ein "weiches" Federverhalten auszeichnet.

Das Verbindungselement 5 kann ebenfalls mit einer richtungsabhängigen Eigensteifigkeit versehen sein, bei einer Aufhängung des Kameraskeletts 1 im Kameragehäuse 2 genügt aber die Verwendung eines Verbindungselements mit hoher Eigensteifigkeit in Richtung des Pfeiles V3, so daß dieses Verbindungselement 5 als Abstützung wirkt, mit dem die Einhaltung des konstanten Auflagemaßes A sichergestellt wird.

Demgegenüber weist das in der Rückseite der Kamera angeordnete Verbindungselement 6 keine richtungsabhängige Eigensteifigkeit sondern ein weiches Federverhalten auf, das mit hoher Vorspannkraft in Richtung des Pfeiles K das Kameraskelett 1 in Richtung auf die Frontseite des Kameragehäuses 2 drückt, so daß eine präzise Einhaltung des Auflagemaßes A gewährleistet ist.

Die in Figur 1 zum besseren Verständnis der erfindungsgemäßen Lösung schematisch dargestellten Verbindungselemente und deren Anordnung zwischen Kameraskelett 1 und Kameragehäuse 2 soll anhand der nachfolgenden Figuren detailliert erläutert werden.

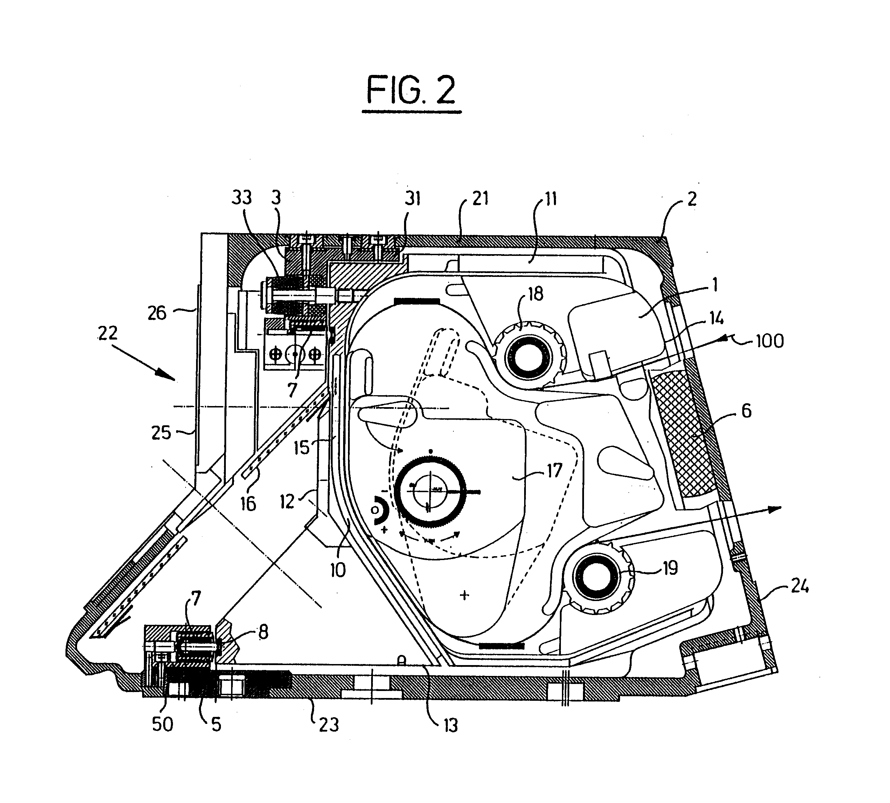

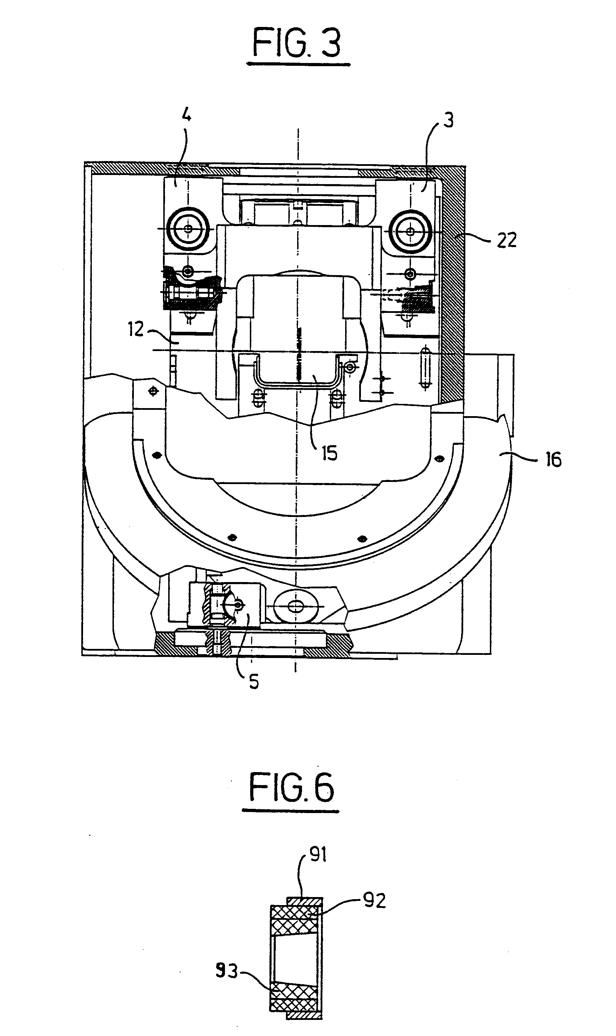

Figur 2 zeigt einen Längsschnitt und Figur 3 ein teilweise geschnittene Frontansicht einer Laufbildkamera mit einem Kameraskelett 1 und einem Kameragehäuse 2, zwischen denen Verbindungselemente 3, 5, 6 analog zur Prinzipdarstellung gemäß Figur 1 angeordnet sind.

Das Kameraskelett 1 trägt sämtliche bewegliche und damit geräuscherzeugende Elemente einer Laufbildkamera, sämlich ein Greiferschaltwerk 17, Vor- und Nachwickel-Zahnrollen 18, 19 sowie eine rotierende Spiegelblende 16.

Das Kameragehäuse 2 ist an seiner Frontseite 22 mit einer Objektivbefestigung 26 versehen, die die Objektivebene 25 festlegt. Der Laufbildfilm 100 wird intermittierend mittels des Greiferschaltwerks 17 an einem Bildfenster 15 an der Frontseite 12 des Kameraskeletts 1 entlang bewegt, wobei das Bildfenster 15 die Bildebene 10 festlegt.

Zwischen der Oberseite 21 des Kameragehäuses 2 und der Oberseite 11 des Kameraskeletts 1 sind zu beiden Seiten des Bildfensters 15 Verbindungselemente 3, 4 mit richtungsabhängiger Eigensteifigkeit vorgesehen, während aussermittig zur Symmetrieachse der Laufbildkamera ein Verbindungselement 5 zur Abstützung in Auflagemaßrichtung zwischen dem Boden 23 des Kameragehäuses 2 und der Frontseite 12 des Kameraskeletts 1 angeordnet ist.

Ein Verbindungselement 6 mit weichen Federeigenschaften ohne richtungsabhängige Eigensteifigkeit ist zwischen der Rückseite 24 des Kameragehäuses 2 und der Rückseite 14 des Kameraskeletts 1 angeordnet und drückt das Kameraskelett 1 in Richtung auf die frontseitigen Verbindungselemente 3, 4, 5. In dem verbleibenden Spalt zwischen der Oberseite 21 des Kameragehäuses 2 und der Oberseite 11 des Kameraskeletts 1, der Frontseite 22 des Kameragehäuses 2 und der Frontseite 12 des Kameraskeletts 1 sowie zwischen dem Boden 23 des Kameragehäuses 2 und der Unterseite 13 des Kameraskeletts 1 und der Rückseite 24 des Kameragehäuses 2 und der Rückseite 14 des Kameraskeletts 1 weist keine weiteren Verbindungselemente auf, so daß hier allenfalls die Übertragung von Luftschall von den geräuscherzeugenden Elementen auf dem Kameraskelett 1 zum Kameragehäuse 2 möglich ist.

Diese Luftschallübertragung kann bei Bedarf zur ergänzenden Geräuschdämmung durch geeignete Maßnahmen weitestgehend unterbunden werden, beispielsweise durch Anbringen schalldämmender Beläge auf der Innenfläche des Kameragehäuses 2 oder dergleichen.

Die oberen Verbindungselemente 3 und 4 sind dabei so konstruiert, daß sie in Richtung des Auflagemaßes, d.h. zwischen der Objektivebene 25 und der Bildebene 15 ein konstantes Auflagemaß sicherstellen und andererseits ein weiches Verhalten in der Ebene senkrecht dazu gewährleisten. Dies wird durch die Anordnung von Gummipuffern 33 einerseits zur weichen Lagerung und durch einen Schwingungsdämpfer 7 zur maßhaltigen Anordnung andererseits innerhalb eines Lagergehäuses 31 ermöglicht.

Das untere Verbindungselement 5 soll dagegen eine feste Abstützung in Richtung auf das Auflagemaß bieten, so daß dieses sich aus einem Schwingungsdämpfer 7 zusammensetzt, der in einem Lagergehäuse 50 angeordnet ist. Das Lagergehäuse 50 ist unmittelbar mit dem Boden 23 des Kameragehäuses 2 verbunden, wobei die Verbindung über einen Einsatz in den Boden 23 des Kameragehäuses 2 erfolgt.

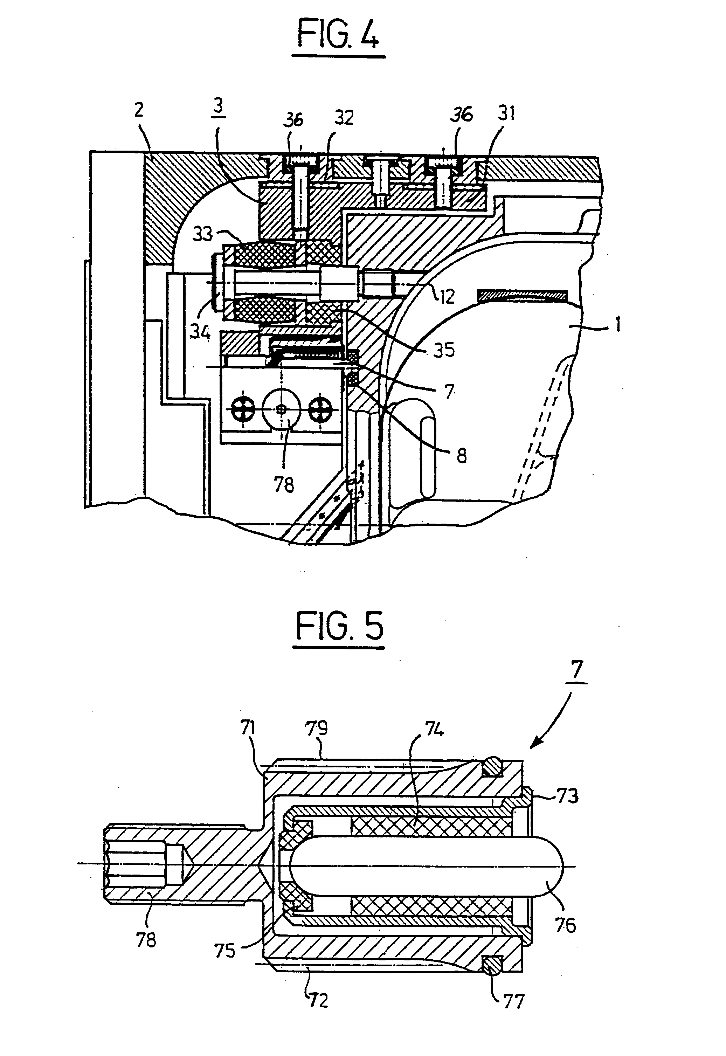

Der detaillierte Aufbau der Verbindungselemente mit weicher und harter Lagerung sowie der Schwingungsdämpfer soll nachstehend an Detaildarstellungen in den Figuren 4 und 5 näher erläutert werden.

Wie die Figuren 2 und 3 deutlich zeigen, werden die Verstellelemente mit richtungsabhängiger Eigensteifigkeit so an der Frontseite der Kamera angeordnet, daß keine Geräuschentwicklung über das Kameragehäuse 2 übertragen wird. Zu diesem Zweck werden Stellen im Kameragehäuse 2 ausgewählt, die unempfindlich in Bezug auf ein Eigenschwingverhalten sind. Bei diesen Stellen handelt es sich um Eck- oder Kantenbereiche des Kameragehäuses 2, wobei zur Aufhängung des Kameraskeletts 1 im Kameragehäuse 2 die Eckbereiche zu beiden Seiten des Bildfensters 15 sowie zur Abstützung unterhalb der rotierenden Spiegelblende 16 gemäß Figur 3 ausgewählt worden.

Würde man dagegen beliebige andere Bereiche wählen, könnte dies zur Folge haben, daß der Körperschall auf die Frontseite 22 des Kameragehäuses 2 übertragen wird, wodurch Eigenschwingungen der Frontseite 22 hervorgerufen werden, die wiederum an das wie eine Antenne wirkende Objektiv weitergeleitet werden, so daß der Körperschall an die Umgebung übertragen wird.

Figur 4 zeigt im Detail vergrößert ein Verbindungselement mit richtungsabhängiger Eigensteifigkeit wie sie im vorliegenden Ausführungsbeispiel zur Aufhängung des Kameraskeletts 1 am Kameragehäuse 2 zu beiden Seiten des Bildfensters 15 gemäß Figur 3 verwendet werden.

Dieses Verbindungselement mit richtungsabhängiger Eigensteifigkeit weist ein Lagergehäuse 31 auf, das mittels Schraubverbindungen und zwischen dem Lagergehäuse 31 und der Innenseite des Kameragehäuses 2 angeordneten Eladur-Scheiben 32 mit dem Kameragehäuse 2 verbunden ist. Dabei unterbinden Eladur-Scheiben 36, die unter die Schrauben zum Befestigen des Lagergehäuses 31 vorgesehen sind, eine mögliche Geräuschbrücke zum Kameragehäuse 2. Das Lagergehäuse 31 weist eine in Richtung des Auflagemaßes verlaufende Bohrung auf, in die eine Lagerbuchse 35 eingesetzt ist, für die alternativ auch eine in Figur 6 dargestellte Lagerbuchse verwendet werden kann.

Weiterhin ist in die Bohrung des Lagergehäuses 31 ein Gummielement 33 eingesetzt, das mittels einer durch eine Innenbohrung des Gummielements 33 gesteckte Schraube 34 befestigt ist. Die Schraube 34 ist in ein Innengewindeteil in der Frontseite 12 des Kameraskeletts 1 eingeschraubt.

Das Gummielement 33 stellt eine weiche Aufhängung in Richtung senkrecht zum Auflagemaß sicher. Demgegenüber sorgt ein Schwingungsdämpfer 7 für eine hohe Eigensteifigkeit in Richtung des Auflagemaßes und besorgt zusätzlich eine Temperaturkompensation, so daß auch bei starken Temperaturänderungen kein Nachjustieren zur Einstellung des vorgegebenen Auflagemaßes erforderlich ist.

Zur Grob- und Feinjustierung weist der Schwingungsdämpfer 7 entsprechende Einstellvorrichtungen auf, wobei zur Feinjustierung ein Schneckengetriebe 78 dient, das seitlich zugänglich ist, so daß jeweils von den Außenseiten die erforderliche Feinjustierung vorgenommen werden kann. Die konstruktiven Einzelheiten des Schwingungsdämpfers 7 sollen nachstehend anhand der Schnittdarstellung gemäß Figur 5 näher erläutert werden.

Figur 5 zeigt einen Längsschnitt durch einen Schwingungsdämpfer 7 wie er sowohl in Verbindung mit den Verbindungselementen 3, 4 zur Aufhängung des Kameraskeletts 1 im Kameragehäuse 2 als auch zur Abstützung des Kameraskeletts 1 am Boden 23 des Kameragehäuses 2 gemäß Figur 2 verwendet wird. Dieser Schwingungsdämpfer 7 besteht aus einem Dämpferstift 76, der gemäß dem Längsschnitt durch eine Laufbildkamera gemäß Figur 2 an einer mit dem Kameraskelett 1 verbundenen Plexiglashülse 8 abgestützt ist.

Über das Lagergehäuse 31 bei Anordnung des Schwingungsdämpfers in einem Verstellelement 3, 4 gemäß den Figuren 2 und 3 bzw. unmittelbar über den Boden 23 des Kameragehäuses 2 ist ein Dämpfergehäuse 71 mit dem Kameragehäuse 2 verbunden.

Das Dämpfergehäuse 71 besteht aus einem Zapfen 78 zur Grobeinstellung des Schwingungsdämpfers 7 sowie aus einer Dämpferhülse 79 zur Aufnahme des Dämpferstiftes 76 sowie einer zwischen dem Dämpferstift 76 und dem Innenraum der Dämpferhülse 71 angeordneten Innenhülse 73. Die Innenhülse 73 weist einen U-förmigen Längsschnitt und eine an der einen Stirnseite ausgebildete radiale Schulter auf, wobei der Außendurchmesser der Innenhülse 73 gegenüber dem Innendurchmesser der Dämpferhülse 79 so bemessen ist, daß ein radialer Spalt ausgebildet ist. Lediglich im Bereich der Innenhülsenschulter ist eine kraftschlüssige Verbindung zwischen der Außenfläche der Innenhülse 73 und der Innenfläche bzw. Stirnfläche der Dämpferhülse 79 gegeben.

Zwischen dem Boden der Innenhülse 73 und dem Boden der Dämpferhülse 79 ist ebenfalls ein axialer Spalt vorgesehen, wobei in den Boden der Innenhülse 73 ein Lagerring 75 aus Plexiglas eingesetzt ist, der ein Ende des Dämpferstiftes 76 abstützt. Dieser ist innerhalb der Innenhülse 73 über eine Isolationshülse 74 geführt und stößt mit seinem anderen Ende gegen die Plexiglasbuchse 8 gemäß Figur 2.

Zur Feinjustierung des Schwingungsdämpfers 7 dient ein an der Außenfläche der Dämpferhülse 79 angeordnetes Schneckengewinde, während eine radial umlaufende Nut in der Dämpferhülse 79 im Bereich von deren Stirnfläche zur Aufnahme eines O-Ringes 77 dient, der den Schwingungsdämpfer 7 in dem Lagergehäuse 31 bzw. 51 dichtend lagert. Durch die Umhüllung des Dämpferstiftes 76 mit einer Isolationshülse 74 aus Schaumgummi wird eine schwingungsdämpfende Lagerung des Dämpferstiftes 76 in radialer Richtung gewährleistet, so daß eine "weiche" Lagerung in Bezug auf die Ebene senkrecht zur Richtung des Auflagemaßes gemäß Figur 2 gewährleistet ist.

Demgegenüber ist eine hohe Eigensteifigkeit und damit "harte" Lagerung in der Ebene senkrecht dazu, d.h. in Richtung des Auflagemaßes gewährleistet, wobei durch eine entsprechende Materialauswahl ein Wärmedehnungsausgleich des Schwingungsdämpfers 7 stattfindet.

Das Material des Dämpferstiftes 76 sowie des Dämpfergehäuses 71 besteht aus Stahl mit einem geringen Wärmeausdehnungsquotienten von beispielsweise $1,2 \times 10^{-6}$ mm/C°, während das Material der Innenhülse 73 vorzugsweise aus Aluminium oder einer Aluminium-Zinn-Magnesium-Kupfer-Legierung mit einem Wärmeausgleichsquotienten von beispielsweise $23 \times 10^{-6}$ mm/C° besteht.

Infolge der unterschiedlichen Materialeigenschaften des Dämpfergehäuses 71 und des Dämpferstiftes 76 einerseits und der Innenhülse 73 andererseits wird sichergestellt, daß eine unterschiedliche Wärmeausdehnung der einzelnen Bauteile kompensiert wird, so daß über den Schwingungsdämpfer 7 ein vorgegebenes Auflagemaß zwischen der Frontseite 12 des Kameraskeletts 1 und der Frontseite 22 des Kameragehäuses 2 und damit zwischen der Objektivebene und der Bildebene eingehalten wird.

Dabei erfolgt bei Erhöhung der Umgebungstemperatur eine geringfügige Ausdehnung des Dämpfergehäuses 71, während eine erhebliche Wärmeausdehnung der Innenhülse 73 aufgrund des wesentlich größeren Wärmeausdehnungsquotienten stattfindet. Bei dieser wesentlich größeren Wärmeausdehnung zieht aufgrund der kraftschlüssigen Verbindung zwischen der Innenhülse 73 und dem Dämpferstift 76 die Innenhülse 73 den Dämpferstift 76 mit und kompensiert dabei die geringfügige Ausdehnung des Dämpferstiftes 76 sowie des Dämpfergehäuses 71 in der entgegengesetzten Richtung.

Zur Feinjustierung der Einstellung des Schwingungsdämpfers 7 und damit des Abstandes zwischen der Bildebene und der Objektivebene dient das an der Außenfläche des Dämpfergehäuses 71 bzw. der Dämpferhülse 79 angeordnete Schneckengewinde 72 in Verbindung mit einer Einstellvorrichtung 78 gemäß Figur 4. Die Einstellvorrichtung 78 zur Feinjustierung des Kameraskeletts 1 in Bezug auf den Objektivträger 26 ist dabei so angeordnet, daß eine leichte Verstellung bei geöffnetem Kameragehäuse vorgenommen werden kann.

Figur 6 zeigt einen Schnitt durch ein Lager zur Lagerung der Verbindungselemente mit richtungsabhängigen Eigensteifigkeitseigenschaften, das anstelle der in Figur 2 dargestellten Eladur-Buchse 35 verwendet werden kann.

Diese in Figur 6 dargestellte Buchse besteht aus einem äußeren Stahlring 91, in dem ein Ring 92 aus Spezialgummi mit einer Härte von vorzugsweise 60 Shore angeordnet ist, der wiederum einen Innenring 93 aus Plexiglas aufnimmt. Dieses Lager bietet zusätzlich dämpfende Eigenschaften, so daß die vom Kameraskelett 1 auf den Verbindungsstift 34 gemäß Figur 2 übertragenen Körperschallschwingungen bereits im Lager hinreichend gedämpft werden.

## Patentansprüche

1. Vorrichtung zur Geräuschisolation von Laufbildkameras mit einer schallschützenden Abstützung des die Geräusche erzeugenden Teile des Kameramechanismus tragenden Kameraskeletts in einem Kameragehäuse, das einen Objektivträger aufweist, an dem eine auswechselbare Aufnahmeoptik befestigbar ist, wobei zur schallschützenden Abstützung des Kameraskeletts in dem Kameragehäuse mehrere schallisolierende Verbindungselemente zwischen dem Kameraskelett und dem Kameragehäuse angeordnet sind,

   **dadurch gekennzeichnet,**

   daß zumindest ein Teil (3, 4, 5) der schallisolierenden Verbindungselemente (3, 4, 5, 6) eine richtungsabhängige Eigensteifigkeit aufweist.

2. Vorrichtung nach Anspruch 1 , **dadurch gekennzeichnet,** daß die eine richtungsabhängige Eigensteifigkeit aufweisenden Verbindungselemente (3, 4, 5) eine hohe, fest definierte und temperaturkompensierte Steifigkeit in Richtung des Auflagemaßes (A) zwischen der Objektivebene (25) des Kameragehäuses (2) und der Bildebene (15) des Kameraskeletts (1) sowie eine geringe Steifigkeit in der Ebene senkrecht dazu aufweisen.

3. Vorrichtung nach Anspruch 1 oder 2 , **dadurch gekennzeichnet**, daß die eine richtungsabhängige Steifigkeit aufweisenden Verbindungselemente (3, 4, 5) zwischen der Frontseite (12) des Kameraskeletts (1) und der Frontseite (22) des Kameragehäuses (2) angeordnet und mindestens ein weiteres Verbindungselement (6) zwischen der Rückseite (14) des Kameraskeletts (1) und der Rückseite (24) des Kameragehäuses (2) vorgesehen ist, das bei hoher Elastizität eine große Vorspannkraft zwischen dem Kameraskelett (1) und dem Kameragehäuse (2) ausübt.

4. Vorrichtung nach Anspruch 3 , **dadurch gekennzeichnet**, daß die frontseitigen Verbindungselemente (3, 4, 5) einerseits an der Ober- bzw. Unterseite (21, 23) des Kameragehäuses (2) und andererseits an der Frontplatte (12) des Kameraskeletts (1) befestigt sind und eine vorgegebene, hohe Steifigkeit in Richtung auf die Frontplatte (12) des Kameraskeletts (1) ausüben.

5. Vorrichtung nach Anspruch 4 , **dadurch gekennzeichnet**, daß das Kameraskelett (1) an zwei frontseitigen Verbindungselemente (3, 4) aufgehängt ist, die zu beiden Seiten des Bildfensters (10) bzw. der Objektivbefestigung (26) angeordnet sind, während ein drittes, frontseitiges Verbindungselement (5) unterhalb der Spiegelblende (16) der Laufbildkamera angeordnet ist.

6. Vorrichtung nach einem der vorangehenden Ansprüche, **dadurch gekennzeichnet**, daß die eine richtungsabhängige Eigensteifigkeit aufweisenden Verbindungselemente (3, 4, 5) an Punkten des Kameragehäuses (2) befestigt sind, die eine hohe Struktursteifigkeit aufweisen, insbesondere im Bereich von Ecken oder Kanten des Kameragehäuses (2).

7. Vorrichtung nach einem der vorangehenden Ansprüche, **dadurch gekennzeichnet**, daß die eine richtungsabhängige Eigensteifigkeit aufweisenden Verbindungselemente (3, 4, 5) einen Schwingungsdämpfer (7) enthalten, die ein im wesentlichen hohlzylindrisches Dämpfergehäuse (71), eine im Dämpfergehäuse (71) gelagerte Innenhülse (73) sowie einen an einer Stirnseite der Innenhülse (73) anliegenden und mittels einer Isolationshülse (74) gegenüber der Zylinderwand der Innenhülse (73) geräuschisolierten Dämpferstift (76) aufweisen, der über einen Lagerring (75) vorzugsweise aus Plexiglas an der Stirnwand der Innenhülse (73) und über die Isolationshülse (74) aus Schaumgummi gegenüber der Zylinderwand der Innenhülse (73) abgestützt ist.

8. Vorrichtung nach Anspruch 7, **dadurch gekennzeichnet**, daß die Innenhülse (73) aus Aluminium besteht und an der dem Kameraskelett (1) zugewandten Stirnseite des Dämpfergehäuses (71) aus Stahl abgestützt ist, daß der Dämpferstift (76) aus Stahl an der dem Boden des Dämpfergehäuses (71) zugewandten Stirnseite der Innenhülse (73) mit einem Ende abgestützt ist und mit seinem anderen Ende an einem mit dem Kameraskelett (1) verbundenen Lager (8) abgestützt ist.

9. Vorrichtung nach Anspruch 7 oder 8, **dadurch gekennzeichnet**, daß das Dämpfergehäuse (71) ein Schneckengewinde aufweist, das in Verbindung mit einer Schnecke die Feinjustierung des Kameraskeletts (1) in Bezug auf den Objektivträger (25) ermöglicht und einen zapfenförmigen Teil (78) zur Grobjustierung aufweist.

10. Vorrichtung nach einem der vorangehenden Ansprüche, **dadurch gekennzeichnet**, daß die eine richtungsabhängige Eigensteifigkeit aufweisenden Verbindungselemente (3, 4, 5) ein mit dem Kameragehäuse (2) verbundenes Lagergehäuse (31) aufweisen, das zylindrische Bohrungen enthält, die auf die Frontseite (12) des Kameraskeletts (1) gerichtet sind und zur Aufnahme von Pufferelementen (33) und von Schwingungsdämpfern (7) dienen, wobei die Pufferelemente (33, 34, 35; 9) aus hohlzylindrischen Gummipuffern (33) bestehen, die mittels eines durch die Innenbohrung der Gummipuffer (33) gesteckten Schraubelementes (34) und einer Lagerbuchse (35; 9), dieaus einem äußeren Stahlring, einem im Stahlring angeordneten Ring aus Spezialgummi (92) und einem in dem Ring (32) aus Spezialgummi angeordneten Plexiglas-Ring (93) besteht, mit der Frontseite (12) des Kameraskeletts (1) verbunden sind.

# FIG.1

FIG. 2

# FIG. 3

# FIG.6

# FIG. 4

# FIG. 5

**Europäisches Patentamt**

**EUROPÄISCHER RECHERCHENBERICHT**

Nummer der Anmeldung

**EP 91 25 0210**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-U-8 620 783   (ARNOLD & RICHTER CINE TECHNIK) * Seite 2 * * Seite 4, Absatz 3 - Seite 5, Absatz 3; Ansprüche 1-3, 9; Figuren 1-3 * – – – | 1-10 | G 03 B 17/10 |
| A | PATENT ABSTRACTS OF JAPAN vol. 13, no. 541 (E-854) 05 Dezember 1989, & JP-A-01 222672 (OLYMPUS) 05 September 1989, * das ganze Dokument * – – – | 1 | |
| A | SOVIET INVENTIONS ILLUSTRATED, Derwent Publications Ltd., Section Mechanical, Week 8202,abstract no.82-A4030E/02,18 April 1979 &SU-A-817346 (LENGD NAVAL ACAD) 30 March 1981 – – – – – | 1-10 | |

| RECHERCHIERTE SACHGEBIETE (Int. Cl.5) |
|---|
| G 03 B |

Der vorliegende Recherchenbericht wurde für alle Patentansprüche erstellt

| Recherchenort | Abschlußdatum der Recherche | Prüfer |
|---|---|---|
| Berlin | 11 Dezember 91 | MANNTZ W W |